# NEUE EUROPÄISCHE PATENTSCHRIFT

(11) **EP 0 702 513 B2**
(45) Veröffentlichungstag und Bekanntmachung des Hinweises auf die Entscheidung über den Einspruch: **13.12.2000**
(45) Hinweis auf die Patenterteilung: 09.04.1997
(21) Anmeldenummer: 94916924.7
(22) Anmeldetag: 03.05.1994
(51) Int. Cl.: A01F 15/08, A01F 15/04, A01F 15/10

(54) **LANDWIRTSCHAFTLICHE MASCHINE, INSBESONDERE SELBSTFAHRENDE GROSSBALLENPRESSE**
AGRICULTURAL MACHINE, IN PARTICULAR AUTOMOTIVE LARGE-BALING PRESS
MACHINE AGRICOLE, NOTAMMENT PRESSE AUTOMOTRICE A FAIRE DES BALLES DE GRANDE DIMENSION

(30) Priorität: 05.05.1993 DE 4314569; 01.09.1993 DE 4329469; 29.11.1993 DE 4340639
(43) Veröffentlichungstag der Anmeldung: 27.03.1996
(73) Patentinhaber: SAME DEUTZ-FAHR S.P.A., 24047 Treviglio (Bergamo) (IT)
(72) Erfinder: VON ALLWÖRDEN, Wilhelm, D-89168 Oberstotzingen (DE); ZAPS, Dietrich, D-82166 Gräfelfing (DE)
(74) Vertreter: Quinterno, Giuseppe
(86) Internationale Anmeldenummer: EP9401402
(87) Internationale Veröffentlichungsnummer: WO9424845

(56) Entgegenhaltungen:
- EP-A- 0 381 073
- WO-A-86/05353
- WO-A-94/04020
- DE-A- 1 950 497
- DE-A- 2 200 133
- DE-A- 2 634 638
- DE-A- 4 119 749
- DE-C- 2 748 594
- DE-C- 3 941 092
- FR-A- 2 224 288
- FR-A- 2 375 817
- US-A- 2 800 217
- US-A- 2 834 177
- US-A- 3 006 207
- US-A- 3 481 122
- US-A- 4 430 847
- US-A- 4 612 757
- Power Farming Machinery Journal For Farmers October 1987

## Beschreibung

Die Erfindung betrifft eine landwirtschaftliche Maschine, gemäß den Merkmalen des Oberbegriffes des unabhängigen Patentanspruchs 1.

Es sind derartige landwirtschaftliche Maschinen bekannt, die zumindest eine Aufnahme-, eine Förder- sowie eine Verarbeitungseinrichtung aufweisen, wobei eine von der Aufnahmeeinrichtung aufgenommene und über die Fördereinrichtung der Verarbeitungseinrichtung zuführbare Erntegutmenge nach der Verarbeitung über eine Ablageeinrichtung abgebbar ist. Solche landwirtschaftliche Maschinen weisen keinen eigenständigen Antrieb auf, so daß es erforderlich ist, sie an ein Zugfahrzeug, beispielsweise an einen Traktor, anzuhängen. Der Antrieb der Einrichtungen der landwirtschaftlichen Maschine erfolgt über eine Zapfwelle, wodurch eine umständliche Handhabung mit der Maschine erforderlich ist. Aufgrund der Kraftübertragung von der Zapfwelle des Zugfahrzeuges bis zu den Einrichtungen entstehen Kraft- und Energieverluste. Darüber hinaus ist die Handhabung der Einheit Traktor/landwirtschaftliche Maschine sowohl während des Betriebes auf dem Feld als auch auf der Straße umständlich und unübersichtlich. Ebenso ist der Einsatz dieser Einheit an Schräglagen eingeschränkt.

Aus der US-A-2,834,177 ist eine landwirtschaftliche Maschine bekannt, bei der die Fördereinrichtung neben der Maschine angeordnet ist, wobei diese Fördereinrichtung nicht in Längsrichtung der Maschine, sondern in Querrichtung fördert. Dabei wird das Erntegut neben der Maschine aufgenommen, quer zur Fahrtrichtung in Richtung der Verarbeitungseinrichtung gefördert, wobei der Einlaß der Verarbeitungseinrichtung seitlich der Maschine angeordnet ist. Aufgrund der Breite der Maschine ist eine umständliche Handhabbarkeit gegeben, wobei sich ebenfalls nachteilig auswirkt, daß durch die seitliche Aufnahme des Erntegutes die Gefahr besteht, das mit den Rädern der Maschine auf dem Feld liegendes Erntegut überfahren wird. Da die US-A-3,006,207 eine nahezu identische Maschine zeigt, gilt auch hierfür das zur US-A-2,834,177 gesagte.

Die gattungsbildende FR-A-2 224 288 beschreibt eine landwirtschaftliche Maschine, die eine Aufnahme-, eine Förder- sowie eine Verarbeitungseinrichtung aufweist, wobei eine auf der Aufnahmeeinrichtung aufgenommene und über die Fördereinrichtung der Verarbeitungseinrichtung zuführbare Erntegutmenge nach der Verarbeitung über eine Ablageeinrichtung ablegbar ist, wobei die landwirtschaftliche Maschine ein einen eigenen Antrieb aufweisendes, selbstfahrendes und lenkbares Fahrzeug ist und die Verarbeitungseinrichtung eine zumindest einen Preßraum sowie Preß- und Förderelemente aufweisendes Preßeinrichtung zur Formung von Großballen aus einer Erntegutmenge ist, und wobei die als Fahrzeug ausgebildete Maschine zumindest eine Vorderradeinheit und eine Hinterradeinheit aufweist, wobei eine Radeinheit angetrieben und dieselbe bzw. die weitere Radeinheit lenkbar ist. Bei der FR-A-2 224 288 ist die Fördereinrichtung in einem Bereich vor der vorderen Radeinheit und nahezu senkrecht angeordent, um das aufgenommene Erntegut in einem oberen Bereich der Maschine der Verarbeitungseinrichtung zuzuführen. Mit dieser Fördereinrichtung soll eine gewisse Höhe überwunden werden, da die Öffnung für die sich der Fördereinrichtung anschließende Verarbeitungseinrichtung in einem Bereich am oberen Ende des Fahrzeuges angeordnet ist.

Der Erfindung liegt die Aufgabe zugrunde, eine landwirtschaftliche Maschine derart zu gestalten, daß ein wirtschaftliches Arbeiten, insbesondere in großwirtschaftlichen Betrieben, gegeben ist, daß die Maschine im Betrieb eine effektive Handhabbarkeit aufweist und daß die genannten Nachteile vermieden werden. Außerdem sollen der Gesamtwirkungsgrad (beziehungsweise die Durchsatzleistung) gesteigert und die Kosten bei der Produktion (insbesondere der Serienproduktion) dieser landwirtschaftlichen Maschine reduziert werden.

Diese Aufgabe wird erfindungsgemäß durch die kennzeichnenden Merkmale des Patentanspruches 1 gelöst. Erfindungsgemäß sind die Einrichtungen des Fahrzeuges, insbesondere die Verarbeitungseinrichtung, zur Formung von Großballen aus der Erntegutmenge ausgestaltet. Bei diesen Großballen handelt es sich um aus der Erntegutmenge geformte Ballen, die einen im wesentlichen runden Querschnitt (Rundballen) oder einen im wesentlichen rechteckigen (quaderförmige Ballen) Querschnitt aufweisen. Die Verarbeitungseinrichtung des Fahrzeuges ist derart gestaltet, daß die Großballen insbesondere durch eine Außenbespannung (Seil oder Drahtbindung, Netzbindung, Folie) oder alternativ durch den Preßvorgang alleine in Form gehalten werden.

In Weiterbildung der Erfindung ist der Fahrerstand derart angeordnet, daß zumindest die Aufnahmeeinrichtung in Fahrtrichtung des Fahrzeuges gesehen im Blickfeld einer Bedienperson liegt. Damit ist eine optimale Führung des Fahrzeuges gewährleistet. Weiterhin ist es vorgesehen, daß an dem Fahrerstand die wesentlichen Bedienelemente zumindest für die Einrichtungen des Fahrzeuges angeordnet sind. Neben den Bedienelementen, die zum Führen des Fahrzeuges erforderlich sind (insbesondere Lekung und Geschwindigkeitsregelung), ist es von Vorteil, daß die Einrichtungen des Fahrzeuges von dem Fahrerstand des Fahrzeuges aus einstellbar und veränderbar sind.

Als Beispiel für ein wesentliches Bedienelement für die Preßeinrichtung sei zum Beispiel die Einstellung des Preßdruckes oder der Arbeitsgeschwindigkeit der Aufnahme- oder der Fördereinrichtung genannt.

In Weiterbildung der Erfindung erfolgt der Antrieb hydrostatisch (geregelt), wobei eine Hydropumpe insbesondere direkt an einer Brennkraftmaschine des Fahrzeuges angeordnet ist. In Ergänzung zu dem Hydrostaten kann ein Getriebe vorgesehen werden, mit dem ein weiter Geschwindigkeitsbereich (vorwärts und/oder rückwärts) realisierbar ist.

In Weiterbildung der Erfindung ist zumindest die Preßeinrichtung (beziehungsweise deren Elemente) über Übertragungselemente von der Brennkraftmaschine antreibbar. Auf diese Ausgestaltung wird in der Figurenbeschreibung näher eingegangen.

In Weiterbildung der Erfindung sind die Einrichtungen (insbesondere die Aufnahme-, Förder-, sowie die Preßeinrichtung) synchron zueinander antreibbar und der Antrieb in Abhängigkeit von der Geschwindigkeit des Fahrzeuges steuerbeziehungsweise regelbar. Diese Betriebsart des Fahrzeuges hat den Vorteil daß das Fahrzeug mit einer beliebigen Geschwindigkeit über das Feld fährt und die Erntegutmenge aufnehmen kann, so daß der Antrieb der Einrichtungen in Abhängigkeit von dieser Geschwindigkeit gesteuert beziehungsweise geregelt wird. Dadurch ist eine optimale Handhabbarkeit des Fahrzeuges gegeben, da die Bedienperson sich nicht auf die anfallende Erntegutmenge konzentrieren muß. Zu diesem Zweck ist es vorgesehen, daß die Einrichtungen synchron zueinander antreibbar sind, worunter zu verstehen ist, daß die einzelnen Förderbeziehungsweise Verarbeitungsgeschwindigkeiten der Einrichtungen aufeinander abgestimmt sind, so daß ein durchgehender Materialfluß der Erntegutmenge gewährleistet ist. Dabei ist es denkbar, daß die Einrichtungen von einem einzigen Antrieb aus angetrieben werden und die Einrichtungen untereinander durch Übertragungselemente verbunden sind. Alternativ dazu ist es denkbar, daß jede einzelne Einrichtung oder zumindest Gruppen von Einrichtungen eigenständig antreibbar sind.

In Weiterbildung der Erfindung ist es vorgesehen, daß die Geschwindigkeit des Fahrzeuges in Abhängigkeit von Betriebsparametern zumindest einer der Einrichtungen steuer- beziehungsweise regelbar ist. Durch die Erfassung von Betriebsparametern (beispielsweise Erntegutmenge oder Preßdruck) ist es möglich, zur Steuerung beziehungsweise Regelung der Geschwindigkeit des Fahrzeuges in die Antreibssteuerung des Fahrzeuges (beispielsweise Geschwindigkeitsregelung durch den Hydrostaten) einzugreifen und damit die Geschwindigkeit insbesondere in Abhängigkeit von der anfallenden Erntegutmenge zu variieren. So ist es denkbar, daß bei einem geringen Anfall von Erntegutmenge die Geschwindigkeit des Fahrzeuges höher liegt als bei einer großen Erntegutmenge.

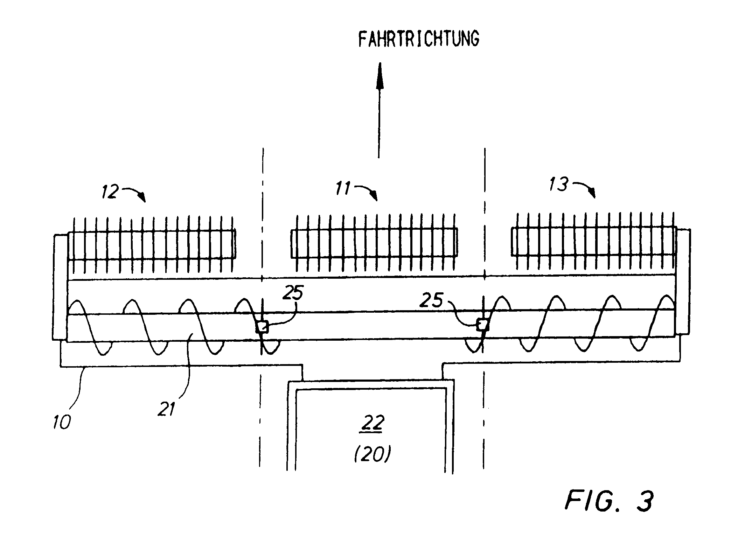

In Weiterbildung ist die Aufnahmeeinrichtung als Pick-Up ausgebildet, wobei die Pick-Up in vorteilhafter Weise eine Breite aufweist, die mindestens der Breite der Fördereinrichtung entspricht. Weiterhin ist es vorgesehen, daß die Pick-Up zumindest über die äußeren Längskonturen des Fahrzeuges, insbesondere über die äußeren Konturen einer Radeinheit, hinausragt. Durch diese genannten Ausgestaltungen der Aufnahmeeinrichtung ist die optimale Aufnahme der Erntegutmenge gewährleistet. Darüberhinaus ist der Vorteil gegeben, daß das sich auf dem Feld befindende Erntegut nicht von den Radeinheiten des Fahrzeuges überfahren wird, so daß ein Qualitätsverlust vermieden wird. Eine konkrete Ausgestaltung der Aufnahmeeinrichtung ist der Figurenbeschreibung und der Figur 3 zu entnehmen.

In Weiterbildung der Erfindung ist zwischen der Pick-Up und der Fördereinrichtung zumindest eine Schnecke derart querliegenden angeordnet, daß das von der Aufnahmeeinrichtung beziehungsweise der Pick-Up aufgenommene Erntegut in Richtung der Fördereinrichtung gefördert wird. Durch Einsatz dieser Schnecke ist es möglich, daß eine höhere Erntegutmenge (beispielsweise mehrere nebeneinander liegende Schwade) aufgenommen werden könnnen, so daß sich die Ernteleistung beziehungsweise die Aufnahmeleistung des Fahrzeuges deutlich erhöht und die Effektivität gesteigert wird.

In Weiterbildung der Erfindung ist die Pick-Up mehrteilig ausgestaltet, wobei zumindest ein Teil, insbesondere zwei äußere Teile, schwenkbar angeordnet sind, wobei der zumindest eine Teil während der Straßenfahrt hochgeklappt und während des Aufnahmebetriebes heruntergeklappt ist.

In Weiterbildung der Erfindung ist die als Förderband, insbesondere als Kratzboden ausgebildete Fördereinrichtung im wesentlichen in einem Förderkanal angeordnet. Dies hat den Vorteil, daß die aufgenommene Erntegutmenge optimal in Richtung der Verarbeitungseinrichtung gefördert wird, ohne daß es zu Verlusten der Erntegutmenge oder zu Verunreinigungen kommt.

In Weiterbildung der Erfindung ist dieser Förderkanal zumindest teilweise, insbesondere in einem der Pick-Up abgewandten Bereich, als Vorratsraum ausgebildet. Alternativ dazu ist es vorgesehen, daß hinter dem Ende der Fördereinrichtung und vor der Verarbeitungseinrichtung beziehungsweise der Preßeinrichtung ein separater Vorratsraum angeordnet ist. Diese beiden alternativen Ausgestaltungen eines Vorratsraumes haben den Vorteil, daß bei einem derartigen Anfall der Erntegutmenge, der die Verarbeitungsgeschwindigkeit der Verarbeitungseinrichtung übersteigt, jederzeit eine Zwischenspeicherung der aufgenommenen Erntegutmenge möglich ist. Dies wirkt sich beispielsweise in dem Augenblick als vorteilhaft aus, in dem ein Großballen fertig gepreßt ist und vor dem Verlassen der Verarbeitungseinrichtung gebunden oder mit einer Folie überzogen wird. Ebenso wirkt sich dieser Vorratsraum vorteilhaft aus, wenn die Bedienperson des Fahrzeuges eine Geschwindigkeit wählt, die derart hoch ist, daß ein kontinuierlicher Fluß der Erntegutmenge nicht mehr gewährleistet wäre.

In Weiterbildung der Erfindung ist die ein- beziehungsweise mehrteilig ausgestaltet Pick-Up höhenverschwenkbar, insbesondere automatisch in Abhängigkeit der Bodenverhältnisse. Für den Fall, daß die Pick-Up einteilig ausgeführt ist, kann diese Pick-Up durch Sensoren, die die Bodenverhältnisse abtasten, diesen automatisch angepaßt werden. Für den Straßenbetrieb des Fahrzeuges ist die Pick-Up hochschwenkbar. Für den Fall, daß die Pick-Up mehrteilig ausgestaltet ist, ist es denkbar, daß jedem Teil der Pick-Up ein eigener Sensor zur Abtastung der Bodenverhältnisse zugeordnet ist, so daß jeder Teil der Pick-Up den Konturen des Bodens folgen kann. Dies erhöht insbesondere die Effektivität bei unebenen Bodenverhältnissen.

In einer weiteren Ausgestaltung der Erfindung ist das Fahrzeug in Abhängigkeit von der sich auf dem Boden befindenden Erntegutmenge selbstätig ohne Bedienperson steuerbar. Zu diesem Zweck ist es vorgesehen, daß die Erntegutmenge, die insbesondere als Schwad abgelegt ist, durch geeignete Sensoren (beispielsweise bildverarbeitende Mittel) erfaßt wird und das Fahrzeug in Abhängigkeit dieser erfaßten Erntegutmenge selbstätig durch Beeinflußung der Lenkung beziehungsweise der Geschwindigkeit geführt wird. Dazu sind in geeigneter Weise Mittel (beispielsweise weitere Sensoren) erforderlich, die ein Ende des Schwades beziehungsweise die Begrenzung des Feldes erkennen.

In Weiterbildung der Erfindung ist es alternativ oder in Ergänzung zu der selbstätigen Steuerung des Fahrzeuges vorgesehen, daß das Fahrzeug von einem Satelittensystem, insbesondere einem GPS-System (Global-Positioning-System), steuerbar ist. Hierbei ist es denkbar, daß das Fahrzeug mit oder ohne Bedienperson beispielsweise auf Parallelbahnen, deren Breite im wesentlichen der Breite der Aufnahmeeinrichtung entspricht, über das Feld, auf dem die Erntegutmenge abgelegt ist, geführt wird.

In Weiterbildung der Erfindung erfolgt ein Antreiben der Preßeinrichtung ausgehend von der Brennkraftmaschine über eine Kraftübertragungseinrichtung und es ist eine Kraftübertragungseinrichtung der Fördereinrichtung und/oder der Aufnahmeeinrichtung [Pick-Up] der Kraftübertragungseinrichtung der Preßeinrichtung nachgeschaltet. Diese Anordnung des Antriebes hat den Vorteil, daß die Preßeinrichtung beispielsweise im Dauerbetrieb läuft und somit ständig in der Lage ist, das von der Aufnahmeeinrichtung aufgenommene Erntegut zu verarbeiten, und die Aufnahmeeinrichtung nach Bedarf zugeschaltet werden kann. Dieser Bedarf besteht dann, wenn die Maschine auf dem Feld zumindest zwei nebeneinander liegende Schwaden der Erntegutmenge aufnehmen soll. Ein Abschalten kann beispielsweise am Ende des Feldes (Vorgewende) erfolgen. Hier ist von Vorteil, daß die Preßeinrichtung im Dauerbetrieb läuft, da beispielsweise im Bereich der Aufnahme- und der Fördereinrichtung sich eine Rest-Erntegutmenge befindet, die noch verarbeitet werden muß.

In Weiterbildung der Erfindung ist zwischen der Brennkraftmaschine und der Preßeinrichtung und/oder zwischen der Preßeinrichtung und der Aufnahmeeinrichtung ein Getriebe geschaltet. Dies hat den Vorteil, daß unterschiedliche Arbeitsgeschwindigkeiten mittels des Getriebes einstellbar sind. Darüber hinaus ist es möglich, über das Getriebe den Antrieb der Preßeinrichtung und/oder den Antrieb der Aufnahmeeinrichtung zu- bzw. abzuschalten. Weiterhin ist es von Vorteil daß die zumindest eine Kraftübertragungseinrichtung bzw. das zumindest eine Getriebe einen Freilauf aufweist. Dies ist insbesondere dann erforderlich, wenn in einer weiteren Ausgestaltung der Erfindung der Antrieb der Preßeinrichtung, insbesondere der damit verbundene Antrieb der Fördereinrichtung, eine Einrichtung zur Drehrichtungsumkehr (Reversiereinrichtung) aufweist. Eine solche Einrichtung zur Drehrichtungsumkehr hat den Vorteil, daß für den Fall, daß während der Aufnahme bzw. der Verarbeitung der Erntegutmenge ein Stau eintritt, dieser durch kurze Betätigung der Einrichtung zur Drehrichtungsumkehr aufgelöst werden kann. Ebenso können damit Verunreinigungen (zum Beispiele Steine) beseitigt (ausgeworfen) werden. Zu diesem Zweck ist insbesondere die Kraftübertragungseinrichtung der Fördereinrichtung und/oder die Kraftübertragungseinrichtung der Preßeinrichtung bzw. der Aufnahmeeinrichtung mit einem Freilauf versehen.

Gemäß der Erfindung ist die Vorderradeinheit im wesentlichen U-förmig ausgebildet, wobei im Inneren des U-förmigen Bereiches die Fördereinrichtung angeordnet ist. Die Räder befinden sich im Endbereich der Schenkel der U-förmigen Ausgestaltung befinden, wobei ein Antrieb der Räder über Übertragungselemente (zum Beispiel Zahnräder und/oder Kardanwellen) erfolgt. In einer besonderen Weiterbildung der Erfindung weist die Vorderradeinheit jeweils einen neben der Fördereinrichtung angeordneten und auf ein Rad wirkenden Hydromotor auf, wobei die Hydromotoren über Schwingen an einem Fahrgestell, insbesondere an einem Gestell der als Einheit ausgebildeten Preßeinrichtung, angeordnet sind. In einer weiteren Ausgestaltung der Erfindung ist die Aufnahmeeinrichtung zumindest zweiteilig ausgebildet, wobei der Antrieb der Aufnahmeeinrichtung ausgehend von dem Getriebe und über Übertragungselemente beidseitig der Fördereinrichtung verlaufend zu den beiden Endseiten der Aufnahmeeinrichtung erfolgt. Diese Ausgestaltungen sind in den Figuren gezeigt und näher beschrieben. Mittels einer getrennten Steuerung der Hydromotoren kann eine Lenkung zusätzlich zu der lenkbaren Hinterradeinheit realiesert werden.

Weiterhin ist vorgesehen, daß die Aufnahmevorrichtung als Schneidwerk ausgebildet oder der Aufnahmevorrichtung zusätzlich ein Schneidwerk zur Ernte von Erntegut zugeordnet ist. Damit ist es möglich, das Erntegut (zum Beispiel Gras, Luzerne, Mais, Elefantengras) auf dem Feld zu schneiden und direkt zu Großballen zu verarbeiten. Darüber hinaus ist es denkbar, das schon geerntete und auf dem Feld liegende Erntegut (zum Beispiel Stroh, Heu) über die Aufnahmeeinrichtung aufzunehmen und einem zusätzlichen Schneidprozeß (zum Beispiel häckseln) zu unterwerfen sowie zu einem von Folie umgebenen Großballen zu verpacken.

Weitere konstruktive Ausgestaltungen und Detaillösungen der landwirtschaftlichen Maschine sind im folgenden näher beschrieben und in den Figuren gezeigt. Die einzelnen Figuren zeigen:
- Figur 1:: Eine erfindungsgemäß ausgestaltete landwirtschaftliche Maschine,
- Figur 2:: Detailausbildungen an der erfindungsgemäßen Maschine,
- Figur 3:: Ausgestaltungen an der Aufnahme- beziehungsweise Fördereinrichtung.
- Figur 4:: Frontansicht einer erfindungsgemäß ausgestalteten landwirtschaftlichen Maschine,
- Figur 5:: Antriebsschema der Preßeinrichtung und der Aufnahmeeinrichtung,
- Figur 6:: ein alternatives Antriebsschema der Preß- und Aufnahmeeinrichtung.
- Figur 7:: eine weitere selbstfahrende landwirtschaftliche Maschine, die kein Ausführungsbeispiel der Erfindung zeigt,
- Figur 8:: Detailansicht einer Aufnahmevorrichtung,
- Figur 9:: Frontdraufsicht auf die landwirtschaftliche Maschine,
- Figur 10:: ein weiteres Antriebsschema

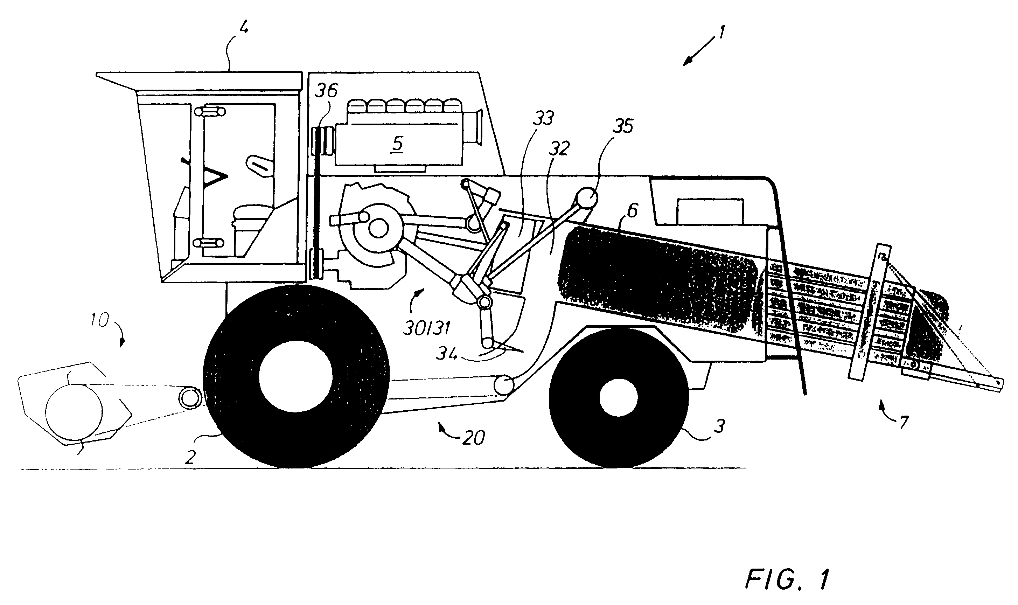

Figur 1 zeigt eine erfindungsgemäß ausgestaltete landwirtschaftliche Maschine. Bei der erfindungsgemäß ausgestalteten landwirtschaftlichen Maschine handelt es sich um ein Fahrzeug 1, das zumindest eine Vorderradeinheit 2 und eine Hinterradeinheit 3 aufweist. Bei dem in dieser Figur 1 gezeigten Fahrzeug 1 handelt es sich um eine selbstfahrende Großballenpresse (Großpackenpresse), die beispielsweise aus gemähtem und getrocknetem Grünfutter beziehungsweise Gras oder Stroh quaderförmige Großballen 6 preßt. Zu diesem Zweck ist das Fahrzeug 1 mit einem Fahrerstand 4 ausgerüstet, der in dieser Figur 1 als geschlossene Fahrerkabine ausgebildet ist. Weiterhin ist in dem Fahrzeug 1 eine Brennkraftmaschine 5 angeordnet, die wenigstens dem Antrieb des Fahrzeuges 1, insbesondere über einen Hydrostaten (nicht gezeigt), dient. Zu diesem Zweck ist es in einer besonderen Ausgestaltung vorgesehen, daß die Vorderradeinheit 2 angetrieben und die Hinterradeinheit 3 gelenkt wird. Weiterhin weist das Fahrzeug 1 eine Aufnahmeeinrichtung 10, eine Fördereinrichtung 20, eine Verarbeitungseinrichtung 30 sowie am Heck des Fahrzeugs 1 eine Ablageeinrichtung 7 auf. Bei der Aufnahmeeinrichtung 10 handelt es sich in vorteilhafter Weise um eine Pick-Up, die in Figur 3 näher beschrieben und gezeigt ist. Der Aufnahmeeinrichtung 10, die für den Straßenbetrieb höhenverschwenkt ist, schließt sich die Fördereinrichtung 20 an, die das von der Aufnahmeeinrichtung 10 aufgenommene Erntegut in Richtung der Verarbeitungseinrichtung 30 fördert. Alternativ zu dieser Ausgestaltung ist es denkbar, daß sich die Verarbeitungseinrichtung 30 direkt der Aufnahmeeinrichtung 10 (unter Weglassung der Fördereinrichtung 20) anschließt. Die Verarbeitungseinrichtung 30 ist in diesem Fall im wesentlichen eine Preßeinrichtung 31, die einen Preßraum 32 aufweist, in dem Preßelemente 33 (stempelartig ausgebildeter Kolben) das Erntegut pressen, das über Förderelemente 34 dem Preßraum 32 zugeführt wird. Mit 35 ist eine Bindeeinrichtung bezeichnet, die den gepreßten Großballen während des Preßvorganges zusammenhält und die nach Abschluß des Preßvorganges den Großballen zusammenschnürt. Alternativ zu der Bindeeinrichtung 35 kann dergestalt eine Einrichtung vorgesehen sein, die den Großballen mit einem Netz oder einer Folie überzieht. In einer vorteilhaften Ausgestaltung der Erfindung erfolgt der Antrieb der Verarbeitungseinrichtung 30 beziehungsweise der Preßeinrichtung 31 direkt über einen Keilriemen 36 von der Brennkraftmaschine 5 aus. Anstelle des Keilriemens 36 sind weitere geeignete Übertragungselemente (beispielsweise Kette) denkbar. Ebenso ist ein eigenständiger Antrieb der Verarbeitungseinrichtung 30 möglich.

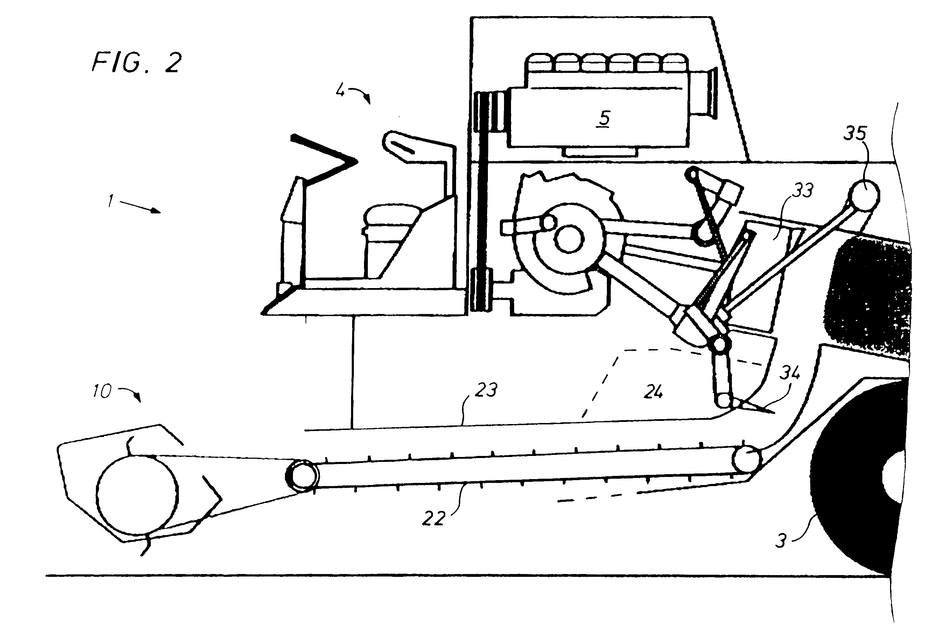

Figur 2 zeigt Detailausbildungen an der erfindungsgemäßen landwirtschaftlichen Maschine.

Neben den in Figur 1 gezeigten und mit den gleichen Bezugsziffern versehenen Komponenten ist in Figur 2 ein Förderband 22 der Fördereinrichtung 20 gezeigt, das das von der Aufnahmeeinrichtung 10 aufgenommene Erntegut in Richtung der Verarbeitungseinrichtung 30 fördert. In einer besonderen Ausgestaltung der Erfindung ist dieses Förderband 22 als Kratzboden ausgebildet. In einer weiteren Ausgestaltung befindet sich das Förderband in einem Förderkanal 23, der das aufgenommene Erntegut in Richtung der Verarbeitungseinrichtung 30 kanalisiert und vor Verunreinigungen schützt. Gleichzeitig dient dieser Förderkanal 23 für den Fall als Vorratsraum, daß von der Aufnahmeeinrichtung 10 mehr Erntegut aufgenommen wird als von der Verarbeitungseinrichtung 30 verarbeitet werden kann. In Ergänzung oder alternativ zu dem Förderkanal 23 als Vorratsraum ist es vorgesehen, in einem Bereich, der der Aufnahmeeeinrichtung 10 abgewandt ist und der vor der Verarbeitungseinrichtung 30 liegt, einen separaten Vorratsraum 24 (gestrichelt dargestellt) vorzusehen. Dieser Vorratsraum 24 hat analog dem Förderkanal 23 die Aufgabe, eine zu große aufgenommene Erntegutmenge zu speichern und dann der Verarbeitungseinrichtung 30 zuzuführen, wenn eine Verarbeitung gewährleistet ist. Zu diesem Zweck ist es beispielsweise denkbar, die Förderelemente 34 unabhängig von der Preßeinrichtung 31 (beziehungsweise unabhängig von den Preßelementen 33) anzutreiben, so daß diese Förderelemente 34 nur dann in Betrieb sind, wenn die Erntegutmenge in den Preßraum 32 gefördert werden kann. Für den Fall, daß ein Vorratsraum 24 vorhanden ist, ist es beispielsweise denkbar, den Antrieb der Aufnahmeeinrichtung 10 beziehungsweise der Fördereinrichtung 20 kontinuierlich in Abhängigkeit von der Geschwindigkeit des Fahrzeuges 1 oder unabhängig davon laufen zu lassen und die Geschwindigkeit der Förderelemente 34 beziehungsweise der Preßelemente 33 in Abhängigkeit der in dem Vorratsraum 34 vorhandenen Erntegutmenge und der in dem Preßraum 32 vorhandenen Erntegutmenge zu variieren. Alternativ zu dem in Figur 1 gezeigten Fahrerstand 4 ist der in Figur 2 gezeigte Fahrerstand 4 offen.

Figur 3 zeigt Ausgestaltungen an der Aufnahme- beziehungsweise Fördereinrichtung.

Bei der in Figur 3 gezeigten Aufnahmeeinrichtung 10 handelt es sich um eine mehrteilig ausgebildete Pick-Up, wobei diese in eine mittlere Pick-Up 11 sowie zwei äußere Teile 12 und 13 unterteilt ist. Zwischen der Pick-Up 11 (beziehungsweise einschließlich der beiden äußeren Teile 12 und 13) und der Fördereinrichtung 20 (beziehungsweise vor Beginn des Förderbandes 22) ist in Fahrtrichtung betrachtet zumindest eine Schnecke 21 derart querliegenden angeordnet, daß das von der Aufnahmeeinrichtung 10 beziehungsweise der Pick-Up 11 (12, 13) aufgenommene Erntegut in Richtung der Fördereinrichtung 20 gefördert wird. Zur Vermeidung einer Überbreite des Fahrzeuges 1 im Straßenbetrieb und zur automatischen Anpassung an die Bodenkonturen ist die Aufnahmeeinrichtung 10 beziehungsweise die Schnecke 21 mehrteilig ausgebildet, wobei die beiden äußeren Teile 12 und 13 über Gelenke 25 (gestrichelte Linie) höhenverschwenkbar sind. In Figur 3 ist gezeigt, daß die Pick-Up 11, 12, 13 mit der Schnecke 21 antriebsmäßig gekoppelt ist (beispielsweise über ein nicht gezeigtes Getriebe) und sich mit der gleichen Drehzahl dreht. In einer besonderen Ausgestaltung der Erfindung ist diese Drehzahl direkt proportional zu der Geschwindigkeit des Fahrzeuges 1. In Figur 3 nicht gezeigt sind Sensoren, die die Bodenverhältnisse abtasten und die beiden äußeren Teile 12 und 13 getrennt oder gemeinsam voneinander im Zusammenspiel mit der mittleren Pick-Up 11 oder unabhängig davon höhenverschwenken.

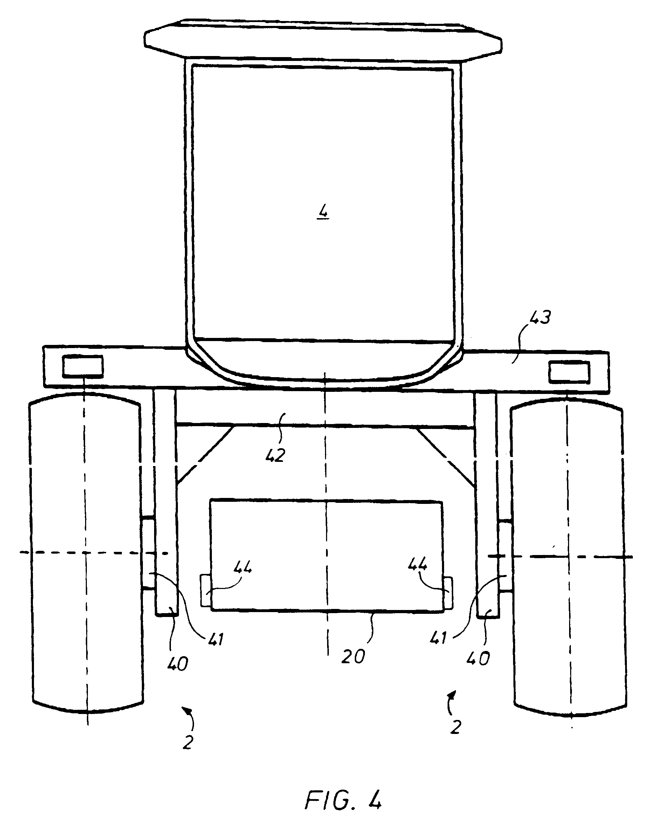

Figur 4 zeigt die Frontansicht einer erfindungsgemäß ausgestalteten landwirtschaftlichen Maschine.

In Ergänzung zu den in den vorangegangen Figuren gezeigten Komponenten sind die Räder der Vorderradeinheit 2 über Schwingen 40 (feststehend oder gelagert, insbesondere gefedert) unter Zwischenschaltung von Hydromotoren 41, die direkt auf die Räder oder indirekt unter Zwischenschaltung eines Getriebes auf die Räder wirken, an einem Rahmen 42 befestigt. Diese im wesentlichen U-förmige Ausgestaltung der Schwingen 40 und des Rahmens 42 hat den Vorteil, daß im Inneren des U-förmigen Bereiches Platz für die Fördereinrichtung 20 (Förderkanal) geschaffen ist. Dadurch weist der Förderkanal einen tiefen Einbaupunkt auf, wodurch die gesamte landwirtschaftliche Maschine flach baut. Darüber hinaus ist es denkbar, die gesamte Preßeinrichtung als eine komplette Einheit auszugestalten, so daß der Rahmen 42 einschließlich der Schwingen 40 an einem in Figur 4 angedeuteten und mit der Bezugsziffer 43 versehenen Gestell (Trageinheit) der Preßeinrichtung (31) verbunden werden kann. Dies hat insbesondere fertigungstechnische Vorteile, da die als Einheit ausgebildete Preßeinrichtung lediglich mit Komponenten wie Aufnahme-, Förder- und fahrzeugtypischen Einrichtungen versehen werden muß. Durch dieses Baukastenprinzip ist eine kostengünstige Herstellung der erfindungsgemäßen landwirtschaftlichen Maschine gegeben. Mit der Bezugsziffer 44 sind Anschlagpunkte für Hydraulikzylinder bezeichnet, die auf die Aufnahmeeinrichtung 10 wirken und eine Höhenverschwenkung gestatten.

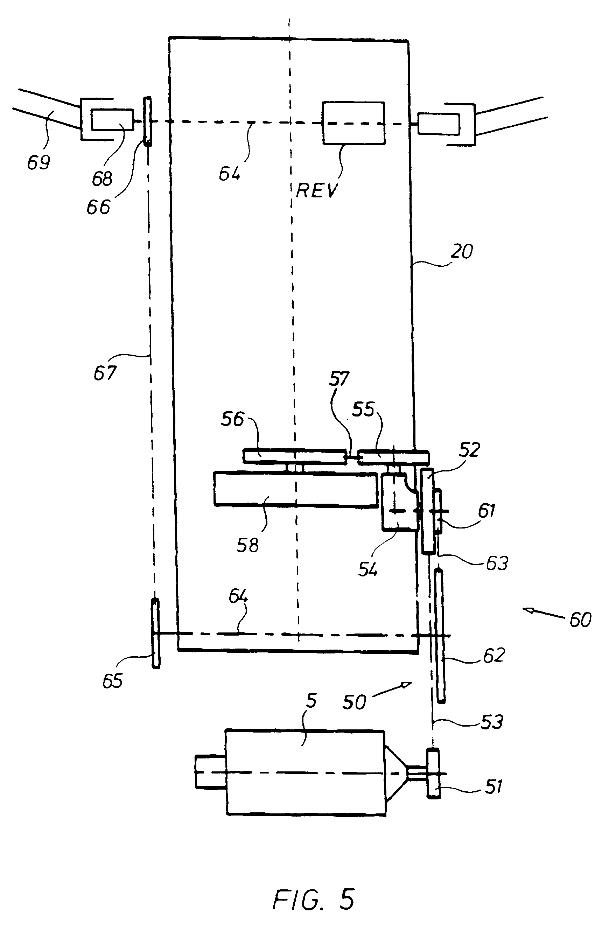

Figur 5 zeigt ein Antriebsschema der Preß- und Aufnahmeeinrichtung.

So erfolgt ein Antrieb der Preßeinrichtung 31 ausgehend von der Brennkraftmaschine 5, während ein Antrieb der Aufnahmeeinrichtung 10 (beziehungsweise der Pick-Up 11) dem Antrieb der Preßeinrichtung 31 nachgeschaltet ist. Eine Kraftübertragungseinrichtung 50 der Preßeinrichtung 31 besteht insbesondere aus zwei Riemenscheiben 51 und 52, die über einen Riemen 53 verbunden sind. Dieses durch die Riemenscheiben 51 und 52 sowie durch den Riemen 53 gebildetes Getriebe ist konstruktiv einfach gebaut und ermöglicht einen Freilauf in der Art, daß dem Riemen 53 eine Andruckrolle (in Figur 5 nicht gezeigt) zugeordnet ist, die im eingeschalteten Zustand der Kraftübertragungseinrichtung 50 auf den Riemen 53 drückt und diesen spannt, während der Freilauf durch Wegnehmen des Druckes freigegeben wird. Weiterhin ist ein Winkelgetriebe 54 vorgesehen, wobei das Winkelgetriebe 54 ebenfalls auf weitere Riemenscheiben 55 und 56 (verbunden durch einen Riemen 57) wirkt und die Drehbewegung der Brennkraftmaschine 5 auf eine Schwungmasse 58 übertragt. Diese Schwungmasse 58 wirkt dann auf die Preßelemente 33 bzw. auf die Förderelemente 34. Der Kraftübertragungseinrichtung 50 der Preßeinrichtung 31 ist eine Kraftübertragungseinrichtung 60 der Aufnahmeeinrichtung 10 nachgeschaltet, wobei diese wiederrum aus Riemenscheiben 61 und 62 (verbunden durch einen Riemen 63) besteht. Diese kann ebenfalls mit einem Freilauf (wie bei 50 beschrieben) versehen sein. Darüber hinaus ist es denkbar, daß die Kraftübertragungseinrichtung 60 nicht nur auf die Aufnahmeeinrichtung 10 wirkt, sondern auch die Fördereinrichtung 20 antreibt. Zu diesem Zweck ist eine auf die Fördereinrichtung 20 wirkende Welle 64 vorgesehen, auf der endseitig die Riemenscheibe 62 und eine weitere Riemenscheibe 65 aufgebracht sind. Die Riemenscheibe 65 überträgt die Drehbewegung der Brennkraftmaschine 5 über einen Riemen 67 auf eine Riemenscheibe 66, die auf einer weiteren Welle 64 im Einzugsbereich (Frontbereich) der Fördereinrichtung 20 sitzt. Im Endbereich dieser im Frontbereich angeordneten Welle 64 sind Zapfwellenstummel 68 angeordnet, die mit Übertragungselementen 69 (Welle einschließlich Kadangelenke) verbindbar sind, die auf die Aufnahmeeinrichtung 10 antriebsmäßig wirken, so daß der Antrieb der Aufnahmeeinrichtung 10 ausgehend von einem Getriebe und über die Übertragungselemente entlang der Fördereinrichtung 20 verlaufend zu den beiden Endseiten der Aufnahmeeinrichtung 10 erfolgt. Zur Realisierung der Drehrichtungsumkehr kann beispielsweise eine der beiden Wellen 64 mit einem Antrieb versehen sein, der nach Bedarf zur Drehrichtungsumkehr zugeschaltet werden kann. Hierbei handelt es sich beispielsweise um eine ansich bekannte Einrichtung, wie sie aus dem Bereich der Personenkraftwagen bei den Anlassern bekannt ist.

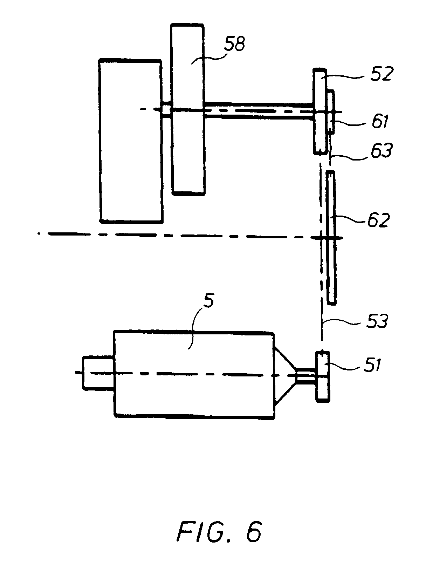

Figur 6 zeigt ein alternatives Antriebsschema der Preß- und Aufnahmeeinrichtung.

Bei diesem Abtriebsschema wird die Schwungmasse 58 direkt von der Riemenscheibe 61 angetrieben. Dies hat den Vorteil, daß das Winkelgetriebe 54 entfällt so daß es sich hierbei um eine kostengünstigere und fertigungstechnisch einfachere Variante handelt.

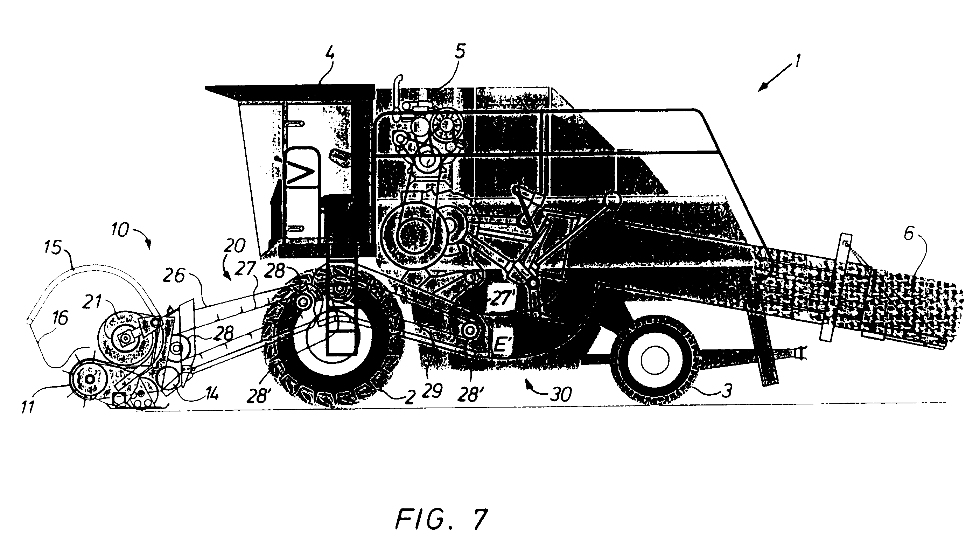

Figur 7 zeigt eine weitere selbstfahrende landwirtschaftliche Maschine.

Erfindungsgemäß ist bei dieser Ausgestaltung in einem Bereich zwischen der Schnecke 21 und dem Beginn der Fördereinrichtung 20 eine angetriebene Zufuhreinrichtung, die in vorteilhafter Ausgestaltung der Erfindung als Walze 14 ausgebildet ist, die mit ihrem Außenumfang nahe an dem Außenumfang der Schnecke 21 angeordnet ist, zum Unterstützen der Zufuhr von der von der Schnecke 21 in den Bereich der Fördereinrichtung 20 geförderten Erntegutmenge zu der Fördereinrichtung 20 angeordnet. Diese insbesondere als Walze ausgebildete Zufuhreinrichtung hat den Vorteil, daß die Zufuhr von Erntegut in dem Bereich der Fördereinrichtung 20 unterstützt wird, die Durchsatzleistung erhöht wird und Verstopfungen beziehungsweise Staubildungen wirksam vermieden werden. In der in dieser Figur 7 gezeigten Ausgestaltung liegen die Achsen der Schnecke 21, der Walze 14 und der Rolle des Förderbandes 27 auf den Eckpunkten eines Dreieckes, wobei ein Eckpunkt in Richtung Boden zeigt und auf diesem die Achse der Walze 14 angeordnet ist. Weiterhin ist es denkbar, die Zufuhreinrichtung in Form eines von einem Exzenter angetriebenen Rechens auszugestalten, so daß die von der Schnecke 21 in den Bereich der Fördereinrichtung 20 geförderte Erntegutmenge pulsierend zu der Fördereinrichtung 20 gefördert wird.

Wie weiterhin in Figur 7 gezeigt ist, sind an der Aufnahmeeinrichtung 10 Tragelemente 15 angeordnet, an deren Ende Niederhalter 16 angeordnet sind, die insbesondere federbelastet sein können. Aufgrund des Einsatzes der Niederhalter 16, die schon aufgrund ihrer gezeigten Ausformung und des verwendeten Materiales (Rundstab) eine Federwirkung aufweisen, wird das von der Pick-Up 11 aufgenommene Erntegut kanalisiert zu der Schnecke 21 geführt, so daß dadurch eine gleichmäßige Aufnahme und Förderung des Erntegutes über die Pick-Up 11 zu der Schnecke 21 und von dieser in den Bereich der Fördereinrichtung 20 gewährleistet ist.

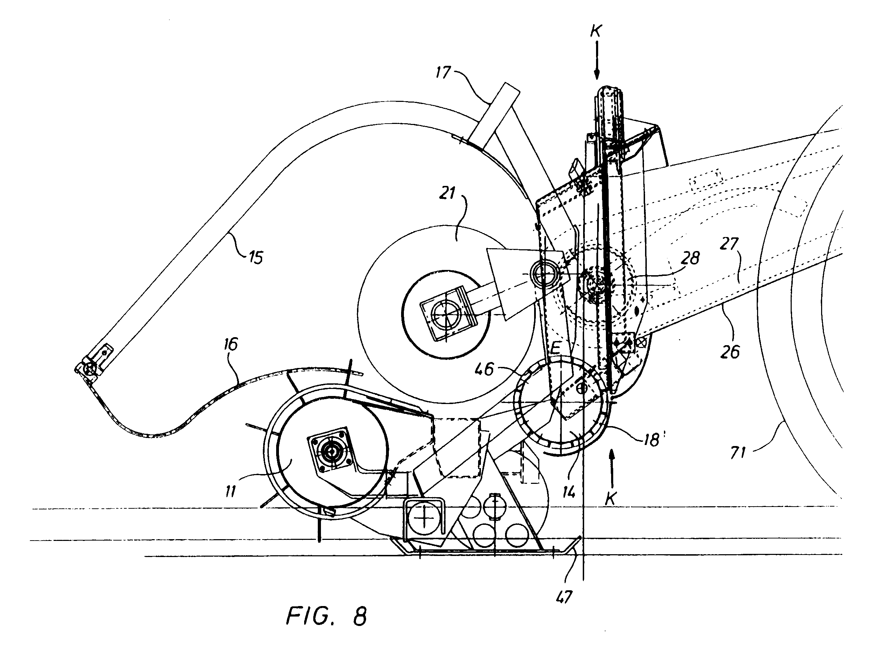

In Weiterbildung der Erfindung weist die Fördereinrichtung 20 in an sich bekannter Weise einen Kanal 26 auf, in welchem das zumindest eine Förderband 27 angeordnet ist, wobei der Kanal 26 eine Ausnehmung 18 zur Aufnahme der Walze 14 aufweist (siehe Figur 8).

In einer weiteren Ausgestaltung der Erfindung ist die Walze 14 derart bewegbar, insbesondere federbelastet, daß der Abstand zwischen dem Außenumfang der Walze und dem Außenumfang der Schnecke 21 (oder auch zum Umlenkpunkt des Förderbandes 27) veränderbar ist. Dies hat den Vorteil, daß die Walze 14 bei einer extrem großen zugeführten Erntegutmenge oder auch bei Verunreinigungen nachgeben kann, so daß der Verarbeitungsprozeß ungehindert weiterlaufen kann. Diesbezüglich weist in einer weiteren Ausgestaltung der Erfindung die Walze 14 auf ihrem Außenumfang zumindest in Teilbereichen Querstege auf, die insbesondere verformbar sind. Bei diesen Querstegen kann es sich beispielsweise um aufgeschweißte Bleche, Gummilippen oder Bürsten handeln. Ebenso sind solche Querstege zumindest in einem mittleren Längsbereich der Schnecke 21, insbesondere im Bereich der Walze 14, angeordnet.

In Weiterbildung der Erfindung erfolgt der Antrieb der Walze 14 synchron oder asynchron zum Antrieb der Schnecke 21 beziehungsweise des Förderbandes 27. Der synchrone Antrieb hat den Vorteil, daß eine stetige und gleichmäßige Zufuhr von Erntegut gewährleistet ist. Im Gegensatz dazu ist es bei dem asynchronen Antrieb von Vorteil, daß, insbesondere bei einer Regelung des Antriebes der Zufuhreinrichtung in Abhängigkeit von dem anfallenden beziehungsweise aufgenommenen Erntegut, bei schwankender aufgenommender Erntegutmenge der Gutstrom vergleichmäßigt wird. In diesem Zusammenhang ist es auch denkbar, den Antrieb zumindest einzelner Komponenten der Aufnahmeeinrichtung 10 (beispielsweise Pick-Up 11, Schnecke 21 oder Walze 14) in Abhängigkeit von der Fahrgeschwindigkeit der Maschine 1 vorzusehen.

In Figur 7 ist weiterhin gezeigt, daß die Fördereinrichtung 20 aus zumindest zwei um jeweils zwei Rollen (28, 28') geführten Förderbändern (27, 27') besteht, die in Längsrichtung der Maschine 1 betrachtet hintereinander angeordnet sind und sich der Übergang von dem einen auf das andere Förderband (von 27 auf 27') in einem Bereich der Umlenkstelle befindet. Diese spezielle Ausgestaltung des allgemeinen erfindungsgemäßen Gedankens, daß eine Vorderradeinheit in an sich bekannter Weise eine Querachse mit sich an ihrem Ende verbundenen Rädern aufweist, wobei die Querachse zumindest ein Differential sowie ein Hydromotor und Bremsen zugeordnet ist und die Fördereinrichtung in Längsrichtung der Maschine über der Querachse angeordnet ist, hat den Vorteil, daß die an sich bekannte Querachse, die ein Baute aus dem Mähdrescherbereich ist, kostengünstig insbesondere bei der Serienproduktion von landwirtschaftlichen Maschinen herstell- und einsetzbar ist. Da diese an sich kostengünstige Querachse eine gerade und durchgehende Ausgestaltung der Fördereinrichtung 20 bei einer wie in Figur 8 gezeigten Einbaulage der Verarbeitungseinrichtung 30 verhindert, ist es erfindungsgemäß vorgesehen, die Fördereinrichtung 20 in Längsrichtung der Maschine über der Querachse anzuordnen. Um einen möglichst tiefliegenden Schwerpunkt der Maschine zu erreichen, ist es erforderlich, aufgrund des tiefliegenden Eingangsbereiches E' der Verarbeitungseinrichtung 30 eine Umlenkstelle in der Fördereinrichtung 20 vorzusehen, so daß der Eingangsbereich E und der Ausgangsbereich A der Fördereinrichtung 20 im wesentlichen in einer Ebene liegen und aufgrund der Verwendung der Umlenkstelle das geförderte Erntegut über die Querachse gefördert wird.

In einer weiteren Ausgestaltung der Erfindung ist es zur Realisierung der Umlenkstelle der Fördereinrichtung in einem Bereich oberhalb der Querachse denkbar, daß die Fördereinrichtung 20 ein einziges um zumindest drei Rollen geführtes Förderband aufweist, wobei eine erste Rolle in dem Eingangsbereich, eine zweite Rolle in einem Bereich der Umlenkstelle sowie die zumindest dritte Rolle in einem Ausgangsbereich, dem sich die Verarbeitungseinrichtung anschließt, der Fördereinrichtung angeordnet ist. Damit ist eine weitere konstruktive Ausgestaltung zur Realisierung der Fördereinrichtung gegeben.

In Weiterbildung der Erfindung ist zumindest das sich der Aufnahmeeinrichtung anschließende Förderband 27 bewegbar, insbesondere drehbar, gelagert. Zu diesem Zweck ist bei der zweiteiligen Ausgestaltung der Fördereinrichtung 20 die Achse der Rolle 28 drehbar gelagert, so daß das Förderband 27 um diesen Punkt bewegbar ist. Bei der einteiligen Ausgestaltung der Fördereinrichtung 20 ist die zweite Rolle, die in dem Bereich der Umlenkstelle angeordnet ist, ebenfalls drehbar gelagert, so daß der von dieser Rolle ausgehende und zu der Aufnahmeeinrichtung 10 gerichtete Teil des Förderbandes höhenbewegbar ist. Die Höhenbewegbarkeit wird insbesondere dadurch erreicht, daß in erfindungsgemäßer Weise die Aufnahmeeinrichtung 10 über an der Querachse befestigte Hydraulikzylinder, die in den Figuren nicht dargestellt sind, höhenbeweglich angeordnet ist. Diese Hydraulikzylinder sind derart ausgestaltet, daß während der Straßenfahrt die gesamte Aufnameeinrichtung 10 hochgeschwenkt wird und während des Einsatzes auf dem Feld zur Aufnahme von Erntegut die Aufnahmeeinrichtung 10 durch eine Regelung dem Boden und Bodenunebenheiten angepaßt werden kann.

Figur 8 zeigt eine Detailansicht der Aufnahmeeinrichtung 10. Neben den in Figur 7 gezeigten und mit den gleichen Bezugsziffern versehenen Komponenten ist zusätzlich ein Querträger 17 gezeigt, der sich an der Aufnahmeeinrichtung (insbesondere an einem nicht bezeichneten Rahmen oder an einer Wanne) abstützt, und an dem die Tragelemente 15 und daran die Niederhalter 16 befestigt sind. Weiterhin ist dieser Figur 8 zu entnehmen, daß die Aufnahmeeinrichtung 10 entlang einer Kupplungsebene K abnehmbar ist. Dies hat insbesondere dann den Vorteil, wenn die Aufnahmeeinrichtung 10 überbreit ausgestaltet ist.

Zu diesem Zweck ist auch der Kanal 26 der Fördereinrichtung 20 teilbar ausgestaltet, so daß sich ein erster Teil der Ausnehmung 18 zur Aufnahme der Walze 14 an der Fördereinrichtung 20 selbst befindet und sich ein weiterer Teil (18') an dem Rahmen oder der Wanne der Aufnahmeeinrichtung 10 abstützt. Weiterhin sind in Figur 8 Kufen 47 gezeigt, mit der sich die Aufnahmeeinrichtung 10 auf dem Boden abstützt. Diese Kufen 47 können auch als Sensor ausgestaltet sein oder einen Sensor beinhalten, der die Bodenunebenheiten erfaßt und die Hydraulikzylinder zum Ausgleich von Bodenunebenheiten entsprechend ansteuert.

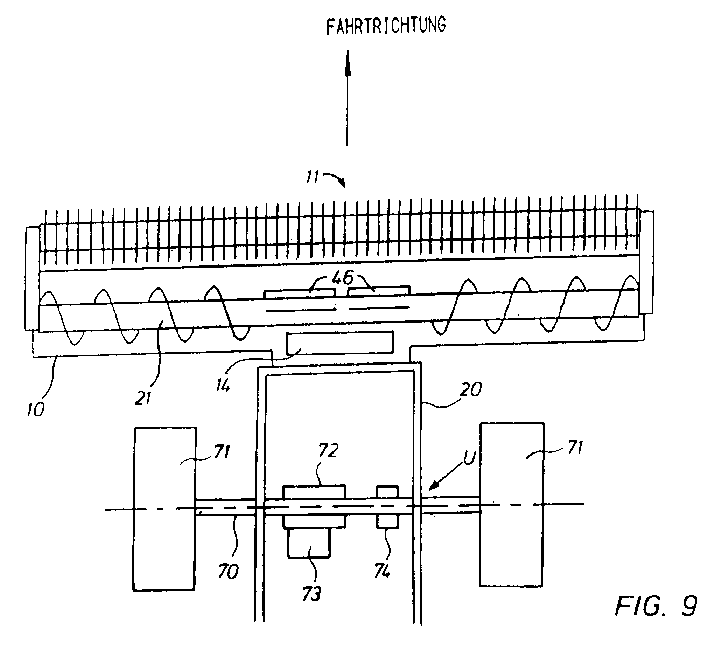

Figur 9 zeigt eine Frontdraufsicht auf die landwirtschaftliche Maschine. Der gezeigten durchgehenden (oder auch mehrteiligen) und insbesondere über die Außenkonturen der Maschine 1 hinausragenden Pick-Up 11 schließt sich die Schnecke 21 an, der die als Walze 14 ausgebildete Zufuhreinrichtung nachgeordnet ist. Die Schnecke 21 (wie gezeigt) oder auch die Walze 14 (hier nicht gezeigt) weisen auf ihrem Außenumfang zumindest in Teilbereichen Querstege 46 aufweist, die insbesondere verformbar sind. Die Walze 14 erstreckt sich zumindest über eine Teilbreite der Fördereinrichtung 20 (beziehungsweise Förderband 27), wobei eine vorteihafte Ausgestaltung eine Erstreckung der Walze 14 über die gesamte Breite der Fördereinrichtung 20 ist. Die Fördereinrichtung 20 weist die Umlenkstelle U insbesondere in einem Bereich der Querachse 70 auf, an deren Ende die Räder 71 angeordnet sind. Weiterhin weist die Querachse 70 ein Differential 72 (insbesondere mit Getriebe), zum Antrieb der Maschine 1 einen Hydromotor 73 sowie Bremsen 74 auf. Bei zweiteiliger Ausgestaltung der Fördereinrichtung 20 ist das erste Förderband 27 in Fahrtrichtung betrachtet vor der Querachse 70 und das weitere Förderband 27' hinter der Querachse 70 angeordnet. Die Umlenkstelle U kann auch in einem Bereich vor oder hinter der Querachse 70 angeordnet sein.

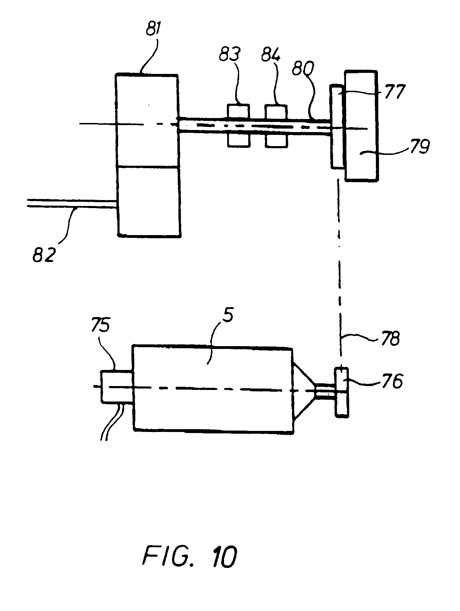

Figur 10 zeigt ein weiteres Antriebsschema. So ist es erfindungsgemäß vorgesehen, daß eine der Verarbeitungseinrichtung 30 zugeordnete Schwungmasse 79 über eine Kraftübertragungseinrichtung (insbesondere bestehend aus den Riemenscheiben 76 und 77), die über den Riemen 78 miteinander verbunden sind mit der Brennkraftmaschine 5 verbunden ist und der Antrieb der weiteren Elemente zumindest der Verarbeitungseinrichtung 30 ausgehend von einer mit der Schwungmasse 79 verbundenen Welle 80 erfolgt. Diese Anordnung bedingt einen konstruktiv einfachen Aufbau und stellt ein zuverlässiges und einfaches Antriebsschema für die Einrichtungen der Maschine dar.

In Weiterbildung der Erfindung ist mit der Welle 80 eine weitere Kraftübertragungseinrichtung verbunden, wobei zwischen dieser Kraftübertragungseinrichtung und der Schwungmasse 79 zumindest eine Rutschkupplung 83 und/oder eine Scherkupplung 84 angeordnet ist. Wie in Figur 10 gezeigt ist, erfolgt ausgehend von der Brennkraftmaschine 5, an der für den Hydromotor 73 eine Hydropumpe 75 angeordnet ist, über die Riemenscheiben 76 und 77, die über den Riemen 78 miteinander verbunden sind, der Antrieb der Schwungmasse 79. Mit der Schwungmasse 79 ist die Welle 80 verbunden, die zu der weiteren Kraftübertragungseinrichtung, insbesondere zu einem Getriebe 81, führt. Von dem Getriebe 81 führt eine Abtriebswelle 82 zu weiteren Einrichtungen der Maschine, wobei diese Abtriebswelle 82 weitere Riementriebe aufweisen kann. Zwischen der Schwungmasse 79 und dem Getriebe 81 sind in der Welle 80 zumindest eine Rutschkupplung 83 und/oder eine Scherkupplung 84 angeordnet, die insbesondere bei Überlast oder Blockierung von zumindest einer Einrichtung der Maschine wirksam werden, so daß der Antrieb wirksam geschont werden und Beeinträchtigungen beziehungsweise Beschädigungen vermieden werden.

Es sei noch darauf hingewiesen, daß die Verarbeitungseinrichtung auch zum Pressen von langfaserigen Werkstoffen, wie zum Beispiel Kartonagen oder Papier ausgebildet ist und die Maschine für diesen Zweck eingesetzt wird. Für diesen Einsatzzweck kann zum Beispiel die Aufnahmeeinrichtung abgenommen werden, so daß die Fördereinrichtung direkt zugänglich ist, um die langfaserigen Werkstoffe direkt zuzuführen. Auch ist es denkbar, zu diesem Zweck anstelle der Aufnahmeeinrichtung einen Sammelbehälter anzukuppeln.
Weiterhin kann das Förderband 27 (und auch das Förderband 27') als Kettenförderer ausgebildet sein, wobei dann die Rollen 28 und 28' zumindest zweifach vorhanden sind, wobei jeweils um ein Rollenpaar 28 eine Kette umläuft, die mit Querstegen, die das Erntegut fördern, mit der weiteren Kette des weiteren Rollenpaares 28' verbunden ist.

Es sei noch ergänzend darauf hingewiesen, daß die erfindungsgemäß ausgestaltete Maschine sich sowohl zur Formung von im wesentlichen quaderförmigen Großballen als auch zur Formung von Rundballen einsetzen läßt. Zur Formung von Rundballen sind die Verarbeitungseinrichtung 30 beziehungsweise deren Elemente 31 bis 35 in entsprechender Weise umzugestalten. Die Erzeugung von quaderförmigen Großballen stellt eine bevorzugte Ausführungsform dar. Darüber hinaus ist es denkbar, hinter einer mehrteilig ausgebildeten Aufnahmeeinrichtung jeweils einzelne Fördereinrichtungen und sich daran anschließend einzelne Verarbeitungseinrichtungen anzuordnen, so daß beispielsweise mit einem einzigen Fahrzeug mehrere Großballen nebeneinander (beziehungsweise mehrere Kleinballen) geformt werden können. Auch bei dieser Anordnung ist es denkbar, daß jeder einzelnen Pick-Up eine Schneck querliegend zugeordnet ist, die das von den einzelnen Pick-Up's aufgenommene Erntegut in Richtung der einzelnen Fördereinrichtungen kanalisiert. Weiterhin ist es erfindungsgemäß vorgesehen, die Brennkraftmaschine 5 in einem Bereich im wesentlichen oberhalb der Fördereinrichtung 20 beziehungsweise der Verarbeitungseinrichtung 30 und in einem Bereich im wesentlichen zwischen den beiden Radeinheiten 2 und 3 anzuordnen. Dadurch ist eine räumliche Nähe der einzelnen Komponenten zueinander gegeben, so daß aufwendige Übertragungselemente entfallen und die Preßeinrichtung 31 (wie in Figur 1 und Figur 2 gezeigt) direkt von einem Keilriemen 36 angetrieben werden kann. Bei dem als geschlossene Kabine ausgestalteten Fahrerstand 4 handelt es sich in vorteilhafter Weise um eine geräuschisolierte und klimatisierte Fahrerkabine, so daß dadurch der Bedienkomfort des Fahrzeuges 1 erhöht wird. Insbesondere aus der Kombination der Figuren 1 und 3 ergibt sich, daß die Bedienperson von dem Fahrerstand 4 einen freien Blick auf die gesamte Aufnahmeeinrichtung 10 (einschließlich der äußeren Konturen der beiden äußeren Teile 12 und 13) hat.

## Patentansprüche

1. Landwirtschaftliche Maschine, die als einen eigenen Antrieb mit einer Brennkraftmaschine (5) aufweisendes, selbstfahrendes und lenkbares Fahrzeug (1) mit einem Fahrerstand (4) ausgebildet ist, das zumindest eine Vorderradeinheit (2) mit zwei Vorderrädern und eine Hinterradeinheit (3) aufweist, und die zumindest eine Aufnahme-, eine Förder- sowie eine
Verarbeitungseinrichtung (10, 20, 30) aufweist, wobei eine von der Aufnahmeeinrichtung (10) aufgenommene und über die Fördereinrichtung (20) der
Verarbeitungseinrichtung (30) zuführbare Erntegutmenge nach der Verarbeitung durch eine Ablageeinrichtung (7) ablegbar ist, wobei die Verarbeitungseinrichtung (30) eine zumindest einen Preßraum (32) sowie Preß- und Förderelemente (33, 34) aufweisende Preßeinrichtung (31) zur Formung von Großballen (6) aus der Erntegutmenge ist, wobei der Fahrerstand (4) im Bereich der Vorderradeinheit (2) und die Preßeinrichtung (31) im wesentlichen oberhalb der Hinterradeinheit (3) angeordnet sind,
dadurch gekennzeichnet,
dass die Fördereinrichtung (20) in Längsrichtung der Maschine (1) unter dem Fahrerstand (4) und zwischen den Vorderrädern angeordnet und von unten an die Preßeinrichtung (31) angeschlossen ist, wobei die Vorderradeinheit im wesentlichen U-förmig ausgebildet ist, wobei die Fördereinrichtung (20) zumindest teilweise im Inneren des U-förmigen Bereichs angeordnet ist.

2. Landwirtschaftliche Maschine nach Anspruch 1,
**dadurch gekennzeichnet,** daß der Antrieb hydostatisch erfolgt, wobei eine Hydropumpe (75) insbesondere direkt an der Brennkraftmaschine (5) angeordnet ist und den Rädern (71) zumindest ein Hydromotor (73, 41) zugeordnet ist.

3. Landwirtschaftliche Maschine nach einem der vorhergehenden Ansprüche,
*dadurch gekennzeichnet,* daß zumindest die Preßeinrichtung (31) beziehungsweise deren Elemente zumindest teilweise über Übertragungselemente von der Brennkraftmaschine (5) antreibbar ist beziehungsweise sind.

4. Landwirtschaftliche Maschine nach einem der vorhergehenden Ansprüche,
*dadurch gekennzeichnet,* daß zumindest die Preßeinrichtung (31) beziehungsweise deren Elemente zumindest teilweise hydraulisch und/oder elektromotorisch antreibbar ist beziehungsweise sind.

5. Landwirtschaftliche Maschine nach einem der vorhergehenden Ansprüche,
*dadurch gekennzeichnet,* daß die Einrichtungen (10, 20, 30) synchron zueinander antreibbar sind und der Antrieb in Abhängigkeit von der Geschwindigkeit des Fahrzeuges (1) steuer- beziehungsweise regelbar ist.

6. Landwirtschaftliche Maschine nach einem der vorhergehenden Ansprüche,
*dadurch gekennzeichnet,* daß die Geschwindigkeit des Fahrzeuges (1) in Abhängigkeit von Betriebsparametern zumindest einer der Einrichtungen (10, 20, 30) steuer- beziehungsweise regelbar ist.

7. Landwirtschaftliche Maschine nach einem der vorhergehenden Ansprüche,
*dadurch gekennzeichnet,* daß die Aufnahmeeinrichtung (10) als Pick-Up (11) ausgebildet ist.

8. Landwirtschaftliche Maschine nach einem der vorhergehenden Ansprüche,
*dadurch gekennzeichnet,* daß die Pick-Up (11) zumindest über die äußeren Längskonturen des Fahrzeuges (1), insbesondere über die äußeren Konturen einer Radeinheit, hinausragt.

9. Landwirtschaftliche Maschine nach einem der vorhergehenden Ansprüche,
*dadurch gekennzeichnet,* daß zwischen der Pick-Up (11) und der Fördereinrichtung (20) zumindest eine Schnecke (21) derart querliegend angeordnet ist, daß das von der Aufnahmeeinrichtung (10) beziehungsweise der Pick-Up (11) aufgenommene Erntegut in Richtung der Fördereinrichtung (20) gefördert wird.

10. Landwirtschaftliche Maschine nach einem der vorhergehenden Ansprüche,
*dadurch gekennzeichnet,* daß die Pick-Up (11) mehrteilig ausgestaltet ist, wobei zumindest ein Teil, insbesondere zwei äußere Teile (12, 13) schwenkbar angeordnet sind.

11. Landwirtschaftliche Maschine nach einem der vorhergehenden Ansprüche,
*dadurch gekennzeichnet,* daß die Fördereinrichtung (20) als Förderband (22), insbesondere als Kratzboden, ausgebildet ist.

12. Landwirtschaftliche Maschine nach einem der vorhergehenden Ansprüche.
*dadurch gekennzeichnet,* daß die Fördereinrichtung (20) im wesentlichen in einem Förderkanal (23) angeordnet ist.

13. Landwirtschaftliche Maschine nach einem der vorhergehenden Ansprüche,
*dadurch gekennzeichnet,* daß der Förderkanal (23) zumindest teilweise, insbesondere in einem der Pick-Up (11) abgewandten Bereich, als Vorratsraum ausgebildet ist.

14. Landwirtschaftliche Maschine nach einem der vorhergehenden Ansprüche,
*dadurch gekennzeichnet,* daß hinter dem Ende der Fördereinrichtung (20) und vor der Verarbeitungseinrichtung (30) beziehungsweise der Preßeinrichtung (31) ein separater Vorratsraum 24 angeordnet ist.

15. Landwirtschaftliche Maschine nach einem der vorhergehenden Ansprüche.
*dadurch gekennzeichnet,* daß die ein- beziehungsweise mehrteilig ausgestaltete Pick-Up (11) höhenverschwenkbar, insbesondere automatisch in Abhängigkeit der Bodenverhältnisse, ist.

16. Landwirtschaftliche Maschine nach einem der vorhergehenden Ansprüche,
*dadurch gekennzeichnet,* daß eine Kraftübertragungseinrichtung (60) der Fördereinrichtung (20) und/oder der Aufnahmeeinrichtung (10) [Pick-Up] der Kraftübertragungseinrichturig (50) der Preßeinrichtung (31) nachgeschaltet ist.

17. Landwirtschaftliche Maschine nach einem der vorhergehenden Ansprüche,
*dadurch gekennzeichnet,* daß der Antrieb der Fördereinrichtung (20), eine Einrichtung zur Drehrichtungsumkehr aufweist.

18. Landwirtschaftliche Maschine nach einem der vorhergehenden Ansprüche,
*dadurch gekennzeichnet,* daß sich die Räder im Endbereich der Schenkel der U-förmigen Ausgestaltung befinden.

19. Landwirtschaftliche Maschine nach einem der vorhergehenden Ansprüche.
*dadurch gekennzeichnet,* daß die Vorderradeinheit (2) jeweils einen neben der Fördereinrichtung (20) angeordneten und auf ein Rad wirkenden Hydromotor (41) aufweist, wobei die Hydromotoren (41) zumindest über Arme (42) an einem Rahmen (42). insbesondere an einem Gestell der als Trageinheit ausgebildeten Preßeinrichtung (31), angeordnet sind

20. Landwirtschaftliche Maschine nach einem der vorhergehenden Ansprüche,
*dadurch gekennzeichnet,* daß die Aufnahmeeinrichtung (10) zumindest zweiteilig ausgebildet ist, wobei der Antrieb der Aufnahmeeinrichtung (10) ausgehend von der zumindest einen Kraftübertragungseinrichtung (50 bzw. 60) und über Übertragungselemente entlang der Fördereinrichtung (20) verlaufend zu den beiden Endseiten der Aufnahmeeinrichtung erfolgt.

21. Landwirtschaftliche Maschine nach einem der vorhergehenden Ansprüche,
*dadurch gekennzeichnet,* daß die Aufnahmevorrichtung (10) als Schneidwerk ausgebildet oder der Aufnahmevorrichtung (10) zusätzlich ein Schneidwerk zur Ernte von Erntegut zugeordnet ist

22. Landwirtschaftliche Maschine nach einem der vorhergehenden Ansprüche,
*dadurch gekennzeichnet,* daß das Schneidwerk als Maisgebiß, insbesondere als reihenloses Maisgebiß, ausgebildet ist.

23. Landwirtschaftliche Maschine nach einem der vorhergehenden Ansprüche,
*dadurch gekennzeichnet,* daß das Schneidwerk als Rotations-Mähwerk ausgebildet ist.

24. Landwirtschaftliche Maschine nach einem der vorhergehenden Ansprüche
*dadurch gekennzeichnet,* daß in einem Bereich zwischen der Schnecke (21) und dem Beginn der Fördereinrichtung (20) eine angetriebene Zufuhreinrichtung zum Unterstützen der Zufuhr zu der von der Schnecke (21) in den Bereich der Fördereinrichtung (20) geförderten Erntegutmenge zu der Fördereinrichtung (20) angeordnet ist.

25. Landwirtschaftliche Maschine nach Anspruch 24,
*dadurch gekennzeichnet,* daß die Zufuhreinrichtung als Walze (14) ausgebildet ist, die mit ihrem Außenumfang nahe an dem Außenumfang der Schnecke (21) angeordnet ist.

26. Landwirtschaftliche Maschine nach Anspruch 24 oder 25
*dadurch gekennzeichnet,* daß sich die Walze (21) im wesentlichen über die Breite der Fördereinrichtung (20), insbesondere über die Breite eines Förderbandes (27) der Fördereinrichtung (20), erstreckt.

27. Landwirtschaftliche Maschine nach einem der vorhergehenden Ansprüche.
*dadurch gekennzeichnet,* daß die Fördereinrichtung (20) in an sich bekannter Weise einen Kanal (26) aufweist, in welchem das zumindest eine Förderband (27) angeordnet ist, wobei der Kanal (26) eine Ausnehmung (18) zur Aufnahme der Walze (14) aufweist.

28. Landwirtschaftliche Maschine nach einem der vorhergehenden Ansprüche,
*dadurch gekennzeichnet,* daß die Walze (14) derart bewegbar, insbesondere federbelastet. ist, daß der Abstand zwischen dem Außenumfang der Walze (14) und dem Außenumfang der Schnecke (21) veränderbar ist.

29. Landwirtschaftliche Maschine nach einem der vorhergehenden Ansprüche,
*dadurch gekennzeichnet,* daß die Walze (14) auf ihrem Außenumfang zumindest in Teilbereichen Querstege (46) aufweist, die insbesondere verformbar sind.

30. Landwirtschaftliche Maschine nach einem der vorhergehenden Ansprüche,
*dadurch gekennzeichnet,* daß die Walze (14) synchron oder asynchron zur Schnecke (21) beziehungsweise dem Förderband (27) angetrieben ist.

31. Landwirtschaftliche Maschine nach einem der vorhergehenden Ansprüche.
*dadurch gekennzeichnet,* daß der Schnecke (21) mehrere über zumindest zwei Tragelemente (15), die bewegbar oder feststehend an der Aufnahmeeinrichtung (10) angeordnet sind, und an einem Querträger (17) befestigter Niederhalter (16) zugeordnet sind.

32. Landwirtschaftliche Maschine nach einem der vorhergehenden Ansprüche,
*dadurch gekennzeichnet,* daß die Fördereinrichtung (20) eine Umlenkstelle (U) aufweist.

33. Landwirtschaftliche Maschine nach einem der vorhergehenden Ansprüche,
*dadurch gekennzeichnet,* daß die Fördereinrichtung (20) aus zumindest zwei um jeweils zumindest zwei Rollen (28, 28') geführten Förderbänder (27, 27') besteht, die in Längsrichtung der Maschine (1) betrachtet hintereinander angeordnet sind und sich der Übergang von dem einen Förderband (27) auf das andere Förderband (27') in einem Bereich der Umlenkstelle (U) befindet.

34. Landwirtschaftliche Maschine nach einem der vorhergehenden Ansprüche,
*dadurch gekennzeichnet,* daß zumindest das sich der Aufnahmeeinrichtung (10) anschließende Förderband (27) bewegbar, insbesondere drehbar. gelagert ist.

35. Landwirtschaftliche Maschine nach einem der vorhergehenden Ansprüche,
*dadurch gekennzeichnet,* daß eine der Verarbeitungseinrichtung (30) zugeordnete Schwungmasse (79) über eine Kraftübertragungseinrichtung mit einer Brennkraftmaschine (5) verbunden ist und der Antrieb der weiteren Elemente zumindest der Verarbeitungseinrichtung (30) ausgehend von einer mit der Schwungmasse (79) verbundenen Welle (80) erfolgt.

36. Landwirtschaftliche Maschine nach einem der vorhergehenden Ansprüche,
*dadurch gekennzeichnet,* daß mit der Welle eine weitere Kraftübertragungseinrichtung verbunden ist, wobei zwischen dieser Kraftübertragungseinrichtung und der Schwungmasse zumindest eine Rutschkupplung (83) und/oder eine Scherkupplung (84) angeordnet ist.

37. Landwirtschaftliche Maschine nach einem der vorhergehenden Ansprüche.
*dadurch gekennzeichnet,* daß die Preßeinrichtung zum Pressen von langfaserigen Werkstoffen wie zum Beispiel Kartonagen oder Papier ausgebildet ist und die Maschine für diesen Zweck eingesetzt wird.

## Claims

1. An agricultural machine, in the form of a self-propelling, steerable vehicle (1) with an internal combustion engine (5) as its own drive, with an operator's platform (4), provided with at least one front-wheel unit (4) with two front wheels and one rear-wheel unit (3) and which has at least one take-up device, one conveyor device and one processing device (10, 20, 30), wherein a quantity of crop to be harvested taken up by the take-up device (10) and fed via the conveyor (20) to the processing device (30) can be stacked by a stacking unit (7) after processing, wherein the processing device (30) is a baling device (31) with at least one baling compartment (32) and baling and conveying elements (33, 34) for the formation of large bales (6) from the quantity of crop to be harvested, wherein the operator's platform (4) is arranged in the region of the front-wheel unit (2) and the baling device (31) is arranged substantially above the rear-wheel unit (3), **characterised in that** the conveyor (20) is arranged in the longitudinal direction of the machine (1) beneath the operator's platform (4) and between the front wheels and is connected from beneath to the baling device (31), wherein the front-wheel unit is substantially U-shaped, wherein the conveyor (20) is arranged at least in part within the U-shaped region.

2. An agricultural machine according to claim 1,
**characterised in that** the drive is hydrostatic, with a hydraulic pump (75) arranged especially directly on the internal combustion engine (5) and with at least one hydraulic motor (73, 41) assigned to the wheels (71).

3. An agricultural machine according to any one of the preceding claims,
**characterised in that** at least the baling device (31) or its elements can be driven at least in part by the internal combustion engine (5) via transmission elements.

4. An agricultural machine according to any one of the preceding claims,
**characterised in that** at least the baling device (31) or its elements can be driven at least in part hydraulically and/or via an electric motor.

5. An agricultural machine according to any one of the preceding claims,
**characterised in that** the devices (10, 20, 30) can be driven synchronously and that the drive can be controlled in an open-loop or closed-loop manner as a function of the speed of the vehicle (1).

6. An agricultural machine according to any one of the preceding claims,
**characterised in that** the speed of the vehicle (1) can be controlled in a closed-loop or open-loop manner as a function of the operating parameters of at least one of the devices (10, 20, 30).

7. An agricultural machine according to any one of the preceding claims,
**characterised in that** the take-up device (10) is in the form of a pick-up (11).

8. An agricultural machine according to any one of the preceding claims,
**characterised in that** the pick-up (11) projects at least beyond the outer longitudinal contours of the vehicle (1), especially beyond the outer contours of a wheel unit.

9. An agricultural machine according to any one of the preceding claims,
**characterised in that** at least one screw (21) is arranged transversely between the pick-up (11) and the conveyor (20) such that the crop to be harvested taken up by the take-up device (10) or the pick-up (11) is conveyed in the direction of the conveyor (20).

10. An agricultural machine according to any one of the preceding claims,
**characterised in that** the pick-up (11) comprises several parts, with at least one part, especially two outer parts (12, 13) arranged with swivel action.

11. An agricultural machine according to any one of the preceding claims,
**characterised in that** the conveyor (20) is in the form of a conveyor belt (22), especially a scraper floor.

12. An agricultural machine according to any one of the preceding claims,
**characterised in that** the conveyor (20) is substantially arranged in a conveyor channel (23).

13. An agricultural machine according to any one of the preceding claims,
**characterised in that** the conveyor channel (23), at least in part, especially in a region facing away from the pick-up (11) is arranged as a storage compartment.

14. An agricultural machine according to any one of the preceding claims,
**characterised in that** a separate storage compartment (24) is arranged behind the end of the conveyor (20) and in front of the processing device (30) or baling device (31).

15. An agricultural machine according to any one of the preceding claims,
**characterised in that** the pick-up (11), either a single-part or multi-part unit, can be swivelled in height, especially automatically according to ground conditions.

16. An agricultural machine according to any one of the preceding claims,
**characterised in that** a power transmission device (60) of the conveyor (20) and/or the take-up device (10) [pick-up] is arranged downstream of the power transmission device (50) of the baling device (31).

17. An agricultural machine according to any one of the preceding claims,
**characterised in that** the drive of the conveyor (20) has a device for reversing the direction of rotation.

18. An agricultural machine according to any one of the preceding claims,
**characterised in that** the wheels are arranged in the end region of the limbs of the U-shaped arrangement.

19. An agricultural machine according to any one of the preceding claims,
**characterised in that** the front-wheel unit (2) has hydraulic motors (41) arranged next to the conveyor (20) and each acting on one wheel, wherein the hydraulic motors (41) are arranged at least via arms (42) on a frame (42), especially on a frame of the baling device (31) in the form of a supporting unit.

20. An agricultural machine according to any one of the preceding claims,
**characterised in that** the take-up device (10) has an at least two-part construction, wherein the drive of the take-up device (10) commences from the at least one power transmission device (50 or 60) and extends via transmission elements along the conveyor (20) to the two end faces of the take-up device.

21. An agricultural machine according to any one of the preceding claims,
**characterised in that** the take-up device (10) is in the form of a cutting device or that the take-up device (10) is additionally assigned a cutting device for harvesting the crop to be harvested.

22. An agricultural machine according to any one of the preceding claims,
**characterised in that** the cuffing device is a corn teeth cutter, especially a row-less corn teeth cutter.

23. An agricultural machine according to any one of the preceding claims,
**characterised in that** the cutting device is in the form of a rotary mower.

24. An agricultural machine according to any one of the preceding claims,
**characterised in that** a driven feed device is arranged in the region between the screw (21) and the start of the conveyor (20) to support the feed of the crop to be harvested to the conveyor (20) from the screw (21) in the region of the conveyor (20).

25. An agricultural machine according to claim 24,
**characterised in that** the feed is in the farm of a roller (14) which is arranged with its external circumference close to the outer circumference of the screw (21).

26. An agricultural machine according to claim 24 or 25,
**characterised in that** the roller (21) substantially extends beyond the width of the conveyor (20) and especially beyond the width of a conveyor belt (27) of the conveyor (20).

27. An agricultural machine according to any one of the preceding claims,
**characterised in that** the conveyor (20) is provided in a known means with a channel (26), in which the at least single conveyor belt (27) is arranged, wherein the channel (26) has a recess (18) to accommodate the roller (14).

28. An agricultural machine according to any one of the preceding claims,
**characterised in that** the roller (14) can be moved such, and is especially spring-loaded, that the distance between the outer circumference of the roller (14) and the outer circumference of the screw (21) is variable.

29. An agricultural machine according to any one of the preceding claims,
**characterised in that** the roller (14) has transverse webs (46), especially deformable, on at least part regions of its outer circumference.

30. An agricultural machine according to any one of the preceding claims,
**characterised in that** the roller (14) is driven synchronously or asynchronously to the screw (21) or the conveyor belt (27).

31. An agricultural machine according to any one of the preceding claims,
**characterised in that** the screw (21) is assigned a plurality of holding-down devices (16), secured to a transverse member (17), via at least two supporting elements (15) which are arranged on the take-up device (10) so that they can move or are immobile.

32. An agricultural machine according to any one of the preceding claims,
**characterised in that** the conveyor (20) has a deflection point (U).

33. An agricultural machine according to any one of the preceding claims,
**characterised in that** the conveyor (20) comprises at least two conveyor belts (27, 27') each guided around at least two rollers (28, 28') with the said conveyor belts (27, 27') arranged one behind the other when viewed in the longitudinal direction of the machine (1) and with the transition from one conveyor belt (27) to the other conveyor belt (27') in a region of the deflection point (U).

34. An agricultural machine according to any one of the preceding claims,
**characterised in that** at least the conveyor belt (27) adjoining the take-up device (10) is mounted so that it can move and especially is pivot-mounted.

35. An agricultural machine according to any one of the preceding claims,
**characterised in that** a flywheel (79) assigned to the processing device (30) is connected to an internal combustion engine (5) via a power transmission device and that further elements, at least the processing device (30), are driven via a shaft (80) connected to the flywheel (79).

36. An agricultural machine according to any one of the preceding claims,
**characterised in that** a further power transmission device is connected to the shaft, with at least one slip coupling (83) and/or a shear-pin coupling (84) arranged between this power transmission device and the flywheel.

37. An agricultural machine according to any one of the preceding claims,
**characterised in that** the pressing device is designed for the pressing of long-fibre materials, such as cardboard or paper and that the machine is used for this purpose.

## Revendications

1. Machine agricole automotrice, équipée, pour son entraînement propre, d'un moteur à combustion interne (5) et d'un véhicule automoteur et guidé (1), avec un poste de conduite (4), comprenant au moins un ensemble de roues avant (2) avec deux roues avant et un ensemble de roues arrière (3) et au moins des installations de réception, de transfert et de traitement (10, 20, 30), dans laquelle :
- une quantité de produit de récolte prise par une installation de réception (10) et fournie par l'installation de transfert (20) à l'installation de traitement (30), est déposée après traitement par une installation de dépôt (7) ;
- l'installation de traitement (30) est une installation de pressage (31) comprenant au moins une chambre de pressage (32) et des éléments de pressage et de transfert (33, 34) , pour mettre le produit récolté en forme des balles de grandes dimensions (6) ;
- le poste de conduite (4) se trouve dans la zone de l'ensemble de roues avant (2), et l'installation de pressage (31) essentiellement au-dessus de l'ensemble des roues arrière (3),
caractérisée en ce que
- l'installation de transfert (20) est montée dans la direction longitudinale de la machine (1) entre les roues avant sous le poste de conduite (4), et elle est reliée par en dessous à l'installation de pressage (31), l'ensemble de roues avant ayant principalement une forme de U, et l'installation de transfert (20) étant logée au moins partiellement à l'intérieur de la zone en forme de U.

2. Machine agricole selon la revendication 1,
caractérisée en ce que
l'entraînement est hydrostatique, une pompe hydraulique (75) étant montée notamment directement sur le moteur à combustion interne (5) et au moins un moteur hydraulique (73, 41) est associé aux roues (71).

3. Machine agricole selon l'une quelconque des revendications précédentes,
caractérisée en ce qu'
au moins l'installation de pressage (31) ou ses éléments est ou sont entraîné(s) au moins partiellement par des éléments de transmission à partir du moteur à combustion interne (5).

4. Machine agricole selon l'une quelconque des revendications précédentes,
caractérisée en ce qu'
au moins l'installation de pressage (31) ou ses éléments est ou sont entraîné(s) au moins partiellement par un moyen hydraulique et/ou par un moteur électrique.

5. Machine agricole selon l'une quelconque des revendications précédentes,
caractérisée en ce que
les installations (10, 20, 30) sont entraînées en synchronisme et l'entraînement est réglable ou commandé en fonction de la vitesse du véhicule (1).

6. Machine agricole selon l'une quelconque des revendications précédentes,
caractérisée en ce que
la vitesse du véhicule (1) est commandée ou réglée en fonction des paramètres de fonctionnement d'au moins l'une des installations (10, 20, 30).

7. Machine agricole selon l'une quelconque des revendications précédentes,
caractérisée en ce que
l'installation de réception (10) est réalisé sous forme d'un ramasseur (11) (pick-up) de produits végétaux coupés.

8. Machine agricole selon l'une quelconque des revendications précédentes,
caractérisée en ce que
le ramasseur (11) dépasse au moins des contours longitudinaux extérieurs du véhicule (1), notamment par rapport aux contours extérieurs d'un ensemble de roues.

9. Machine agricole selon l'une quelconque des revendications précédentes,
caractérisée en ce que
le ramasseur (11) et l'installation de transfert (20) comportent au moins une vis (21) disposée transversalement pour que le produit de récolte pris par l'installation de réception (10) ou le ramasseur (11) soit transféré dans la direction de l'installation de transfert (20).

10. Machine agricole selon l'une quelconque des revendications précédentes,
caractérisée en ce que
le ramasseur (11) est en plusieurs parties, au moins une partie et notamment deux parties extérieures (12, 13) étant montée(s) pivotante(s).

11. Machine agricole selon l'une quelconque des revendications précédentes,
caractérisée en ce que
l'installation de transfert (20) est une bande transporteuse (22), notamment un fond à griffes.

12. Machine agricole selon l'une quelconque des revendications précédentes,
caractérisée en ce que
l'installation de transfert (20) est placée principalement dans un canal de transfert (23).

13. Machine agricole selon l'une quelconque des revendications précédentes,
caractérisée en ce que
le canal de transfert (23) est formé au moins partiellement, notamment dans la zone opposée au ramasseur (11), sous la forme d'une chambre de réserve.

14. Machine agricole selon l'une quelconque des revendications précédentes,
caractérisée en ce que
derrière l'extrémité de l'installation de transfert (20) et devant l'installation de traitement (30) ou l'installation de pressage (31) il est prévu une chambre de réserve (24) distincte.

15. Machine agricole selon l'une quelconque des revendications précédentes,
caractérisée en ce que
le ramasseur (11), réalisé en une ou plusieurs parties, est pivotant en hauteur notamment automatiquement en fonction de l'état du sol.

16. Machine agricole selon l'une quelconque des revendications précédentes,
caractérisée en ce qu'
une installation de transmission de force (60) de l'installation de transfert (20) et/ou de l'installation de réception (10) (pick-up) est montée en aval de l'installation de transmission de force (50) de l'installation de pressage (31).

17. Machine agricole selon l'une quelconque des revendications précédentes,
caractérisée en ce que
l'entraînement de l'installation de transfert (20) comporte une installation pour inverser le sens de rotation.

18. Machine agricole selon l'une quelconque des revendications précédentes,
caractérisée en ce que
les roues se trouvent dans la zone d'extrémité des branches de la forme de U.

19. Machine agricole selon l'une quelconque des revendications précédentes,
caractérisée en ce que
l'ensemble de roues avant (2) comporte chaque fois un moteur hydraulique (41) prévu à côté de l'installation de transfert (20) et coopérant avec une roue, les moteurs hydrauliques (41) étant montés au moins par des bras (42) sur un châssis (42), notamment sur un bâti de l'installation de pressage (31) en forme d'unité de support.

20. Machine agricole selon l'une quelconque des revendications précédentes,
caractérisée en ce que
l'installation de réception (10) est au moins en deux parties, l'entraînement de l'installation de réception (10) se faisant à partir d'au moins une installation de transmission de force (50) ou (60) et par des éléments de transmission le long de l'installation de transfert (20), vers les deux côtés d'extrémité de l'installation de réception.

21. Machine agricole selon l'une quelconque des revendications précédentes,
caractérisée en ce que
l'installation de réception (10) est en forme de mécanisme de fauche ou l'installation de réception (10) comporte en outre un mécanisme de fauche pour faucher les produits à récolter.

22. Machine agricole selon l'une quelconque des revendications précédentes,
caractérisée en ce que
le mécanisme de fauche est une denture de fauche de maïs, notamment une denture de fauche de maïs, sans rangées.

23. Machine agricole selon l'une quelconque des revendications précédentes,
caractérisée en ce que
le mécanisme de fauche est un mécanisme de fauche à rotation.

24. Machine agricole selon l'une quelconque des revendications précédentes,
caractérisée en ce que
dans la zone comprise entre la vis (21) et le début de l'installation de transfert (20), il y a une installation d'alimentation entraînée pour soutenir dans la zone de transfert (20) l'alimentation de la quantité de produit récolté transféré par la vis (21) vers l'installation de transfert (20).

25. Machine agricole selon la revendication 24,
caractérisée en ce que
l'installation d'alimentation est en forme de cylindre (14) dont la périphérie extérieure est à proximité de la périphérie extérieure de la vis (21).

26. Machine agricole selon la revendication 24 ou 25,
caractérisée en ce que
la vis (21) s'étend pratiquement sur toute la largeur de l'installation de transfert (20), notamment sur toute la largeur d'une bande transporteuse (27) de l'installation de transfert (20).

27. Machine agricole selon l'une quelconque des revendications précédentes,
caractérisée en ce que
l'installation de transfert (20) comporte d'une manière connue en soi un canal (26) logeant au moins une bande transporteuse (27), le canal (26) ayant une cavité (18) pour recevoir le cylindre (14).

28. Machine agricole selon l'une quelconque des revendications précédentes,
caractérisée en ce que
le cylindre (14) est mobile, notamment chargé par ressort pour que la distance entre la périphérie du cylindre (14) et la périphérie de la vis (21) puisse se modifier.

29. Machine agricole selon l'une quelconque des revendications précédentes,
caractérisée en ce que
le cylindre (14) présente à sa périphérie, au moins dans des zones partielles, des traverses (46) qui sont notamment déformables.

30. Machine agricole selon l'une quelconque des revendications précédentes,
caractérisée en ce que
le cylindre (14) est entrainé en synchronisme ou de manière asynchrone par rapport à la vis (21) ou à la bande transporteuse (27).

31. Machine agricole selon l'une quelconque des revendications précédentes,
caractérisée en ce que
la vis (21) est associée à plusieurs et au moins deux éléments de support (15) montés mobiles ou fixes sur l'installation de réception (10) et prévus sur un organe de retenue (16) fixé à une traverse (17).

32. Machine agricole selon l'une quelconque des revendications précédentes,
caractérisée en ce que
l'installation de transfert (20) présente un point de renvoi (U).

33. Machine agricole selon l'une quelconque des revendications précédentes,
caractérisée en ce que
l'installation de transfert (20) se compose d'au moins deux bandes transporteuses (27, 27') guidées chaque fois par au moins deux galets (28, 28'), ces bandes étant placées l'une derrière l'autre dans la direction longitudinale de la machine (1) et la jonction entre une bande transporteuse (27) et l'autre bande transporteuse (27') se trouve dans la zone du point de renvoi (U).

34. Machine agricole selon l'une quelconque des revendications précédentes,
caractérisée en ce qu'
au moins la bande transporteuse (27) qui fait suite à l'installation de réception (10) est mobile notamment en rotation.

35. Machine agricole selon l'une quelconque des revendications précédentes,
caractérisée en ce qu'
une masse d'inertie (79) associée à l'installation de traitement (30) est reliée à un moteur à combustion interne (5) par l'intermédiaire d'une installation de transmission de force, et l'entraînement des autres éléments se fait au moins à partir de l'installation de traitement (30), par un axe (80) relié à la masse d'inertie (79).

36. Machine agricole selon l'une quelconque des revendications précédentes,
caractérisée en ce qu'
une autre installation de transmission de force est reliée à l'axe et entre cette installation de transmission de force et la masse d'inertie il y a au moins un embrayage par friction (83) et/ou un embrayage à cisaillement (84).

37. Machine agricole selon l'une quelconque des revendications précédentes,
caractérisée en ce que
l'installation de pressage est conçue pour presser des matériaux à fibres longues comme par exemple des cartons ou du papier et la machine est utilisée à cet effet.
